# FASCICULE DE BREVET EUROPEEN

(11) **EP 0 748 457 B1**
(45) Date de publication et mention de la délivrance du brevet: **29.03.2000**
(21) Numéro de dépôt: 95943266.7
(22) Date de dépôt: 22.12.1995
(51) Int. Cl.: G01V 1/00, G01V 11/00

(54) **METHODE ET DISPOSITIF POUR LA SURVEILLANCE SISMIQUE A LONG TERME D'UNE ZONE SOUTERRAINE RENFERMANT DES FLUIDES**
VERFAHREN UND ANLAGE ZUR LANGFRISTICHEN ÜBERWACHUNG VON UNTERIRDISCHEN WASSERENTHALTENDEN ZONEN
METHOD AND DEVICE FOR THE LONG-TERM SEISMIC MONITORING OF AN UNDERGROUND AREA CONTAINING FLUIDS

(30) Priorité: 29.12.1994 FR 9415835
(43) Date de publication de la demande: 18.12.1996
(73) Titulaire: INSTITUT FRANCAIS DU PETROLE, 92502 Rueil-Malmaison (FR); GAZ DE FRANCE, 75017 Paris (FR)
(72) Inventeur: LAURENT, Jean, F-78630 Orgeval (FR); HUGUET, Frédéric, F-93800 Epinay-sur-Seine (FR)
(74) Mandataire: Andreeff, François
(86) Numéro de dépôt international: FR9501722
(87) Numéro de publication internationale: WO9621165

(56) Documents cités:
- EP-A- 0 591 037
- FR-A- 1 475 622
- FR-A- 2 689 647
- US-A- 3 384 868
- US-A- 4 009 609

## Description

La présente invention concerne une méthode et un dispositif pour la surveillance sismique à long terme d'une zone souterraine contenant des fluides et plus particulièrement d'un réservoir souterrain de stockage de gaz.

Il est connu de tester le remplissage d'un réservoir souterrain destiné à stocker du gaz naturel à des instants successifs de son chargement, au moyen d'un système sismique comportant un vibrateur ou une source impulsionnelle pour appliquer des ébranlements à la surface du sol et un dispositif de réception comportant des alignements de capteurs disposés en surface ou dans un puits et couplés avec le sol. L'injection de gaz modifiant de façon significative la vitesse du son, la densité et donc l'impédance acoustique de la formation-réservoir, on peut déterminer la variation de l'écart en temps sur les enregistrements sismiques, entre deux réflecteurs situés l'un au-dessus, l'autre au-dessous du réservoir. On peut aussi suivre l'évolution du remplissage, en mesurant la variation de l'amplitude des ondes qui se sont réfléchies à des instants successifs au niveau des couches du réservoir à des instants successifs du remplissage.

Par les demandes de brevet publiées FR 2.593.292, 2.642.849, 2.656.034, 2.688.896, 2.689.647, notamment, on connait des systèmes comportant un ou plusieurs ensembles d'intervention installés à poste fixe dans des puits reliés à la surface par une ou plusieurs voies de transmission. Ces ensembles d'intervention peuvent être de récepteurs sismiques et aussi éventuellement une ou plusieurs sources d'ondes sismiques disposées dans des puits. Les ensembles de récepteurs ou d'émetteurs peuvent être placés à l'extérieur de tubes de cuvelage ou casings. Ils sont couplés avec les formations environnantes par le ciment injecté dans l'espace annulaire autour de ces tubes une fois qu'ils ont été mis en place.

Les ensembles de récepteurs peuvent aussi être associés à un tube de production (tubing) descendu dans un puits et couplés avec les formations environnant le puits par l'intermédiaire du tube de cuvelage ou casing par exemple.

La reconnaissance sismique du sous-sol s'opère d'une façon générale en couplant avec le sol des sources sismiques et des récepteurs, suivant différentes combinaisons où les sources et/ou les récepteurs sont disposés à la surface ou à son voisinage ou dans un ou plusieurs puits au travers de la formation explorée.

Par les demandes de brevet FR 2.703.457, 2.703.470 ou 2.674.029, on connait des méthodes de surveillance sismique de gisements souterrains au moyen d'ensembles de récepteurs placés dans des puits et de sources sismiques disposées à la surface du sol ou éventuellement dans ces mêmes puits. Une méthode de surveillance sismique d'un réservoir de stockage de gaz est également décrite par exemple par E. Blondin et al in Geophysical Prospecting 34, 73-93, 1986.

On réalise des séries de cycles d'émission-réception sismique en changeant à chaque fois l'emplacement de la source sismique par rapport à l'axe du puits où les ensembles de récepteurs sont installés, suivant une technique dite de "walk-away", et en enregistrant les arrivées aux récepteurs R1 à Rn en fonction du temps de propagation t. La source peut être déplacée suivant un axe radial OX et l'on obtient une représentation sismique à deux dimensions (X,t) ou (X,Z). On peut aussi la déplacer tout autour du puits de façon à obtenir une représentation sismique en 3D (X,Y,t), ou bien (X,Y,Z), Z désignant la profondeur, l'axe OY étant perpendiculaire à OX et OZ. Dans la pratique on peut déplacer la source S de part et d'autre du puits sur une distance (ou un rayon) du même ordre de grandeur que la zone souterraine à surveiller.

La surveillance de gisements et le remplissage de réservoirs de stockage en gaz sont généralement des opérations de longue durée. Les variations du volume de la bulle de gaz stockée par exemple, consécutives à des prélèvements ultérieurs sont lentes. Les opérations sismiques de surveillance sont souvent espacées dans le temps. Dans la pratique, il faut réinstaller l'équipement sismique de surface à chaque nouvelle séance d'enregistrement sismique, et, de préférence, reproduire les conditions d'émission des opérations sismiques précédentes.

Les réinstallations ne sont pas toujours possibles. Pour l'exploitation d'un gisement ou d'un réservoir de stockage, on met en place des installations diverses, du matériel, et on clôture le site. Il arrive aussi que les aménagements initiaux soient changés, que l'on modifie le site (déblaiements, remblaiements), que l'on coule des dalles de béton etc., ce qui peut perturber la transmission des ondes sismiques émises ou modifier le couplage de la source avec le sol et ainsi provoquer une variation de la qualité d'émission. L'encombrement du site et ses clôtures peuvent empêcher les déplacements de la source sismique employée. Les modifications et aménagements intervenus entre deux périodes successives de surveillance du gisement ou réservoir, peuvent empêcher aussi que le système d'émission-réception sismique puisse être disposé aux mêmes emplacements.

La méthode selon l'invention permet d'obtenir une parfaite reproductibilité des conditions opératoires dans les opérations répétitives de surveillance sismique d'une zone souterraine traversée par au moins un puits ou forage, et notamment d'un réservoir souterrain de stockage de gaz. La méthode comporte la mise en place à poste fixe d'au moins un ensemble de récepteurs sismiques. La méthode comporte ainsi :
- l'installation pour la durée de surveillance de la zone, de plusieurs sources sismiques répétitives de même type à des emplacements fixes par rapport à la position du puits, ainsi que d'un réseau de liaison permanente pour l'alimentation sélective de ces sources en énergie, et
- la mise en place d'une station centrale adaptée à télécommander sélectivement chacune de ces sources sismiques par l'intermédiaire de ce réseau permanent de liaison, et à enregistrer les signaux sismiques émanant de la zone souterraine en réponse aux ondes sismiques transmises sélectivement dans le sol par les sources sismiques.

Une partie au moins des sources sismiques et du réseau de liaison peut être enterrée ou bien encore installée de façon permanente en surface, et associée à au moins un ensemble de récepteurs qui est couplé en permanence avec le sol en surface ou bien avec la paroi d'un moins un puits traversant la zone souterraine.

La méthode peut comporter par exemple l'utilisation des enregistrements sismiques effectués pour la surveillance d'un gisement souterrain de stockage de fluides.

Grâce à cet ensemble de sources à poste fixe dont le couplage avec les terrains environnant reste stable, et à ce réseau d'alimentation au moins en partie enterré dont l'aire d'emprise en surface est réduite, on peut mener toute une série d'opérations sismiques de surveillance dans des conditions opératoires stables, sans risque d'incompatibilité avec les activités du chantier d'exploitation.

Le dispositif de surveillance sismique d'une zone souterraine traversée par au moins un puits ou forage, selon l'invention, comprend au moins un ensemble de récepteurs sismiques couplés avec la zone souterraine à sa surface ou à son voisinage, ou bien encore dans au moins un puits.

Il comporte ainsi plusieurs sources sismiques répétitives de même type installées en position fixe par rapport à la position du puits (enterrées ou en surface), et il est caractérisé en ce qu'il comporte un ensemble d'alimentation des sources en énergie, un réseau (enterré ou en surface) de liaison permanente entre l'ensemble d'alimentation et les différentes sources sismiques pour les alimenter sélectivement en énergie, et une station centrale incluant des moyens de télécommande sélective de chacune de ces sources sismiques répétitives ainsi qu'un système d'enregistrement des signaux sismiques émanant de la zone souterraine, reçus par cet ensemble de récepteurs en réponse aux ondes sismiques transmises sélectivement dans le sol par les sources sismiques.

Le dispositif peut comporter des éléments de commutation contrôlés par la station centrale pour l'alimentation sélective en énergie des différentes sources.

Le dispositif comporte par exemple des sources sismiques adaptées à créer des ébranlements par explosion d'un mélange de constituants fluides dans une chambre en contact avec le terrain, et un ensemble d'alimentation en mélange explosif, ce mélange pouvant être constitué à partir d'un fluide extrait de la zone souterraine et notamment d'un gaz stocké dans le réservoir souterrain surveillé.

Les sources peuvent aussi comporter chacune une enceinte enterrée déformable élastiquement et remplie de liquide, le réseau d'alimentation étant dans ce cas rempli de liquide et l'ensemble d'alimentation comportant des moyens pour créer des surpressions impulsionnelles dans le liquide.

On peut encore utiliser par exemple des sources comprenant chacune une enceinte enterrée remplie de fluide et un ensemble pour appliquer des vibrations au fluide de l'enceinte, cet ensemble comportant un cylindre, ouvrant sur l'intérieur de la sphère et communiquant par un moyen de liaison avec un vibrateur à distance, et un piston monté coulissant dans le cylindre pour appliquer des vibrations au fluide de la sphère.

A ces sources, on peut associer par exemple un ensemble de récepteurs installé à poste fixe dans un ou plusieurs puits traversant la zone souterraine.

Dans le cas où le dispositif est utilisé pour la surveillance d'un gisement souterrain de stockage de fluides, il comporte des moyens de traitement des enregistrements permettant la détection des variations éventuelles subies par le gisement.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où :
- la Fig. 1 montre schématiquement un exemple de réalisation du dispositif;
- la Fig.2 montre un premier exemple de source explosive pouvant être couplée avec la surface du sol ou enfouie;
- la Fig.3 montre un deuxième exemple de source impulsionnelle également utilisable; et
- la Fig.4 montre un troisième exemple de source de type vibratoire également utilisable.

Le dispositif selon l'invention peut être installé à demeure sur un chantier d'exploitation d'une zone souterraine contenant des fluides, qu'il s'agisse d'un gisement pétrolifère mis en production ou d'un réservoir de stockage de gaz, dans des conditions permettant la reproductibilité d'opérations sismiques de surveillance de la zone.

Il comporte par exemple un ensemble de plusieurs sources d'ondes sismiques S1, S2,... Sk, ... Sn d'un type connu, émettant des vibrations ou des impulsions, qui sont installées à poste fixe à la surface du sol ou dans son voisinage, de façon que le couplage acoustique de chacune d'elles avec le sol reste sensiblement constant sur toute la durée prévue de la surveillance du réservoir. Ces sources sont par exemple alignées de part et d'autre d'un puits 1 foré au travers de la zone à surveiller, suivant une ou plusieurs directions radiales.

De préférence, ces sources sont enfouies dans le sol à une profondeur déterminée. Sont également enfouies, un ou plusieurs moyens de liaison 2 permettant l'alimentation de ces sources en énergie, qu'il s'agisse selon les cas d'une ou de plusieurs canalisations pour des fluides ou bien de câbles électriques. Ces moyens de liaison connectent les sources S1 à Sn à un ensemble d'alimentation adapté 3, par l'intermédiaire de moyens de contrôle permettant le transfert sélectif d'énergie aux différentes sources sismiques.

Les sources peuvent être également installées à poste fixe à la surface du sol sur un socle cimenté par exemple, de façon que leur couplage avec le sol reste sensiblement constant.

Le dispositif comporte également au moins un ensemble de récepteurs sismiques R installés à demeure au contact de la zone surveillée. Cet ensemble de récepteurs R peut être installé par exemple dans le puits 1 ou dans un autre puits comme décrit dans les brevets précités, de façon à le laisser libre pour d'autres activités, ou bien éventuellement enfoui dans le sol au voisinage de la surface. L'ensemble de récepteurs R peut être connecté à une station centrale de commande et d'enregistrement 4 par l'intermédiaire de câbles de liaison 5. Cette station est pourvue de moyens de télécommande permettant le déclenchement sélectif de chacune des sources.

Avec un tel agencement de sources et de récepteurs sismiques en contact permanent et étroit avec les terrains, on rend possible la réalisation de séances reproductibles de surveillance sismique. Les conditions opératoires restant les mêmes, la comparaison des données obtenues à l'issue de séances successives, fournit des résultats précis sur l'évolution à long terme de la zone surveillée.

On place les sources à intervalles réguliers les unes des autres sur une distance de part et d'autre du puits qui est, par exemple, de même ordre de grandeur que la profondeur de la zone souterraine à surveiller. On peut réaliser ainsi des opérations dites de "walk away" en actionnant successivement les différentes sources, et en collectant à chaque fois les signaux reçus par l'ensemble de capteurs.

Pour une installation en surface, on peut utiliser toute source sismique connue émettant des vibrations ou des impulsions, que l'on couple étroitement avec le sol.

Dans le cas où l'on souhaite surveiller le gisement souterrain avec des sources enfouies, on peut utiliser par exemple les modes de réalisation décrits ci-après.

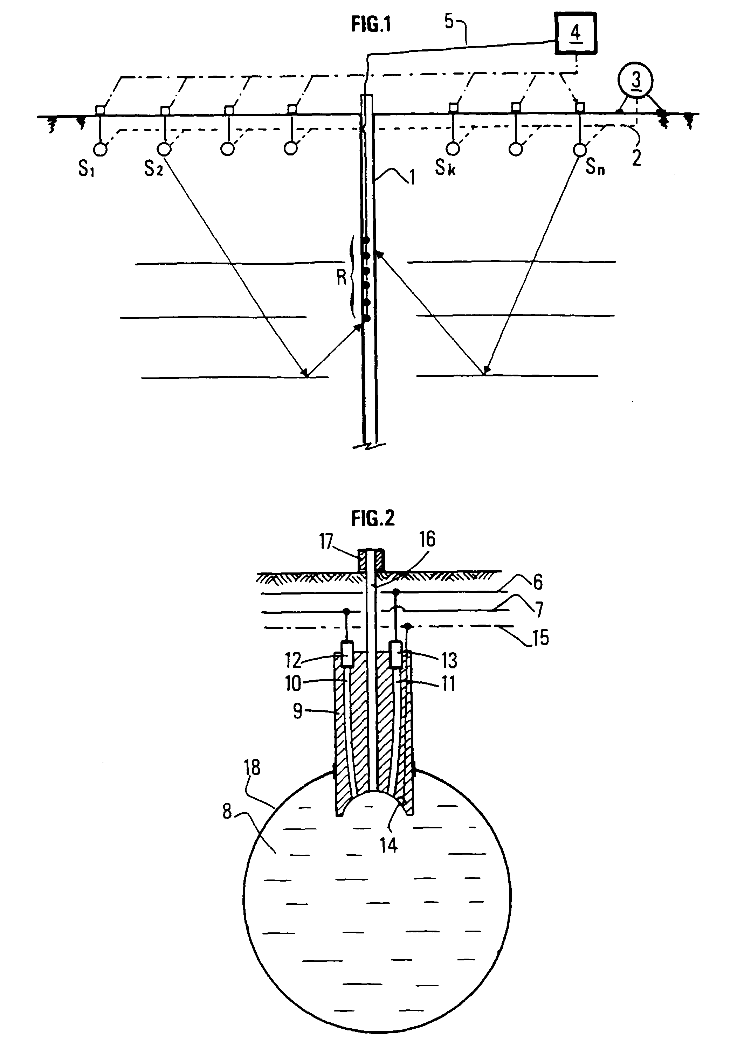

La source schématisée à la Fig.2 par exemple est une source à explosion semblable à celle décrite dans l'addition N° 93.151 au brevet FR 1.475.622. Elle fonctionne par la mise à feu d'un mélange explosif constitué à partir de deux composants amenés séparément jusqu'à elle par des canalisations enterrées 6, 7. Cette source comporte une sphère perforée 8 à l'intérieur de laquelle pénètre un manchon d'alimentation 9. Des canaux intérieurs 10, 11 le traversent de part en part et relient l'intérieur de la sphère 8 avec les canalisations enterrées 6, 7. L'injection des constituants dans la sphère est controlée à distance depuis la station de commande 4 (Fig.1) par des électro-vannes 12, 13. La mise à feu du mélange est assurée par un allumeur 14 commandé de la même façon. Un câble électrique 15 également enterré permet de commander l'allumeur 14 et les électro-vannes 12, 13. Un évent 16 pourvu d'une vanne de contrôle permet l'échappement des gaz brûlés après chaque déclenchement. La sphère 8 est placée dans une enveloppe élastique 18 et enfouie dans le sol.

Dans le cas où des sources de type explosif sont utilisés pour la surveillance d'un site souterrain recélant des substances pouvant être utilisées pour constituer en tout ou en partie le mélange explosif (gisement de stockage de gaz, gisement pétrolifère etc), on peut mettre le réseau d'alimentation 6, 7 en communication avec une réserve de stockage (non représentée) alimentée à partir de ce gisement.

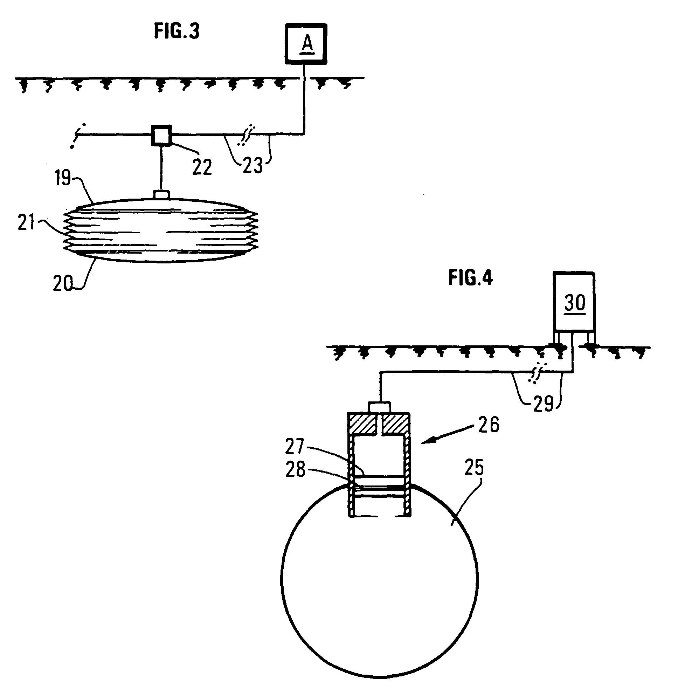

On peut aussi utiliser par exemple une source constituée (Fig.3) de deux plaques rigides 19, 20 réunies l'une à l'autre à leur périphérie par un élément élastiquement déformable 21. Cette enceinte est remplie de liquide et peut communiquer par l'intermédiaire d'une électro-vanne de contrôle 22 avec une canalisation enterrée 23 reliée à un accumulateur hydraulique sous pression 24. Par une ouverture intermittente de la vanne de contrôle 22 depuis la station de commande 4 (Fig.1), on peut provoquer un coup de bélier et la transmission dans le sol par voie de conséquence, de fortes impulsions sismiques.

Il est possible encore d'utiliser une source vibrante constituée par exemple (Fig.4) d'une enceinte déformable 25 remplie de liquide dans laquelle est encastré un cylindre 26. Un piston 27 pourvu de joints d'étanchéité 28, est monté coulissant dans le cylindre 26, lequel communique par une canalisation 29 avec un vibrateur 30 installé à distance et placé sous le contrôle de la même station de commande 4 (Fig.1).

Dans le cas où la zone souterraine est un gisement souterrain de stockage de fluides par exemple, la station centrale peut comporter en outre des moyens de traitement des enregistrements permettant la détection des variations éventuelles subies par ledit gisement entre deux séances successives de surveillance sismique du gisement.

Les exemples précédents ne sont bien entendu pas limitatifs.

## Revendications

1. Méthode de surveillance sismique d'une zone souterraine traversée par au moins un puits ou forage d'exploitation, telle qu'un gisement souterrain de stockage de fluides, à partir d'ondes sismiques reçues et enregistrées, émanant de la zone souterraine en réponse à des ondes sismiques qui y sont transmises, comportant la mise en place à poste fixe d'au moins un ensemble de récepteurs sismiques (R), comportant :
- l'installation pour la durée de surveillance de la zone, de plusieurs sources sismiques répétitives de même type (S) à des emplacements fixes par rapport à la position du puits, la méthode étant caractérisée en ce qu'elle comporte l'installation ainsi qu'un réseau (2) de liaison permanente pour l'alimentation sélective de ces sources en énergie, et
- la mise en place d'une station centrale (4) adaptée à télécommander sélectivement chacune de ces sources sismiques (S) par l'intermédiaire de ce réseau permanent de liaison (2), et à enregistrer les signaux sismiques émanant de la zone souterraine en réponse aux ondes sismiques transmises sélectivement dans le sol par les sources sismiques (S).

2. Méthode selon la revendication 1, caractérisée en ce qu'au moins une partie des sources sismiques (S) et du réseau de liaison (2) est enterrée.

3. Méthode selon la revendication 1 caractérisé en ce qu'une partie au moins des sources sismiques (S) et du réseau de liaison (2) est installé de façon permanente en surface.

4. Méthode selon l'une des revendications précédentes, caractérisée en ce qu'elle comporte l'utilisation des enregistrements sismiques effectués pour la surveillance d'un gisement souterrain de stockage de fluides.

5. Méthode selon l'une des revendications précédentes, caractérisé en ce que au moins un ensemble (R) de récepteurs sismiques est couplé en permanence avec le sol en surface.

6. Méthode selon l'une des revendications 1 - 4, caractérisé en ce que au moins un ensemble (R) de récepteurs est couplé en permanence avec la paroi d'un moins un puits traversant la zone souterraine.

7. Dispositif de surveillance sismique d'une zone souterraine traversée par au moins un puits ou forage, telle qu'un gisement souterrain de stockage de fluides, comportant au moins un ensemble de récepteurs sismiques disposés à poste fixe et plusieurs sources sismiques répétitives (S) installées à poste fixe caractérisé en ce qu'il comporte, un ensemble (3) d'alimentation des sources en énergie, un réseau (2) de liaison permanente entre l'ensemble d'alimentation (3) et les différentes sources (S) pour les alimenter sélectivement en énergie, et une station centrale (4) incluant des moyens de télécommande sélective de chacune des sources répétitives, ainsi qu'un système d'enregistrement des signaux sismiques émanant de la zone souterraine, reçus par ledit ensemble (R) de récepteurs en réponse aux ondes sismiques transmises sélectivement dans le sol par les sources sismiques.

8. Dispositif selon la revendication précédente, caractérisé en ce qu'une partie au moins des sources sismiques (S) et du réseau (2) de liaison permanente est enterrée.

9. Dispositif selon la revendication 7, caractérisé en ce qu'une partie au moins des sources sismiques (S) et du réseau (2) de liaison permanente, est disposée à poste fixe en surface.

10. Dispositif selon l'une des revendications 7 à 9, caractérisé en ce qu'il comporte des éléments de commutation (12, 13) contrôlés par la station centrale (4), pour l'alimentation sélective en énergie des différentes sources sismiques (S).

11. Dispositif selon l'une des revendications 7 à 10, caractérisé en ce qu'il comporte une ou plusieurs sources sismiques adaptées à créer des ébranlements par explosion d'un mélange de constituants fluides dans une chambre (18) en contact avec le terrain, et un ensemble (3, 12, 13) d'alimentation sélective de chaque chambre (18) en mélange explosif et de mise à feu de ce mélange, le réseau comportant des canalisations enterrées (6, 7) associées à des vannes de contrôle (12, 13) connectées à cet ensemble d'alimentation.

12. Dispositif selon la revendication précédente 11, caractérisé en ce que l'ensemble d'alimentation (3) comporte des moyens pour alimenter le réseau (6, 7) avec un constituant fluide prélevé ou extrait de la zone souterraine.

13. Dispositif selon l'une des revendications 7 à 10, caractérisé en ce qu'il comporte une ou plusieurs sources sismiques comprenant chacune une enceinte enterrée (19, 21) déformable élastiquement et remplie de liquide, le réseau d'alimentation (23) étant rempli de liquide, l'ensemble d'alimentation comportant des moyens (A, 23) pour créer des surpressions impulsionnelles dans le liquide.

14. Dispositif selon l'une des revendications 7 à 10, caractérisé en ce qu'il comporte une ou plusieurs sources comprenant chacune une enceinte enterrée (25) remplie de fluide et un ensemble pour appliquer des vibrations au fluide de l'enceinte, cet ensemble comportant un cylindre (26), ouvrant sur l'intérieur de la sphère et communiquant par un moyen de liaison (27) avec un vibrateur (28) à distance, et un piston (29) monté coulissant dans le cylindre pour appliquer des vibrations au fluide de la sphère.

15. Dispositif selon l'une des revendications 7 à 14, caractérisé en ce qu'il comporte au moins un ensemble (R) de récepteurs installés à poste fixe dans au moins un puits (1) traversant la zone souterraine.

16. Dispositif selon l'une des revendications 7 à 15, caractérisé en ce que, la zone souterraine étant un gisement souterrain de stockage de fluides, il comporte des moyens de traitement des enregistrements permettant la détection des variations subies par ledit gisement.

## Patentansprüche

1. Verfahren zur seismischen Überwachung einer unterirdischen durch wenigstens ein Bohrloch oder eine Aufschlußbohrung, durchsetzte Zone, beispielsweise eine unterirdische Lagerstätte zum Speichern von Fluiden, ausgehend von seismischen empfangenen und aufgezeichneten, aus der unterirdischen Zone stammenden Wellen in Abhängigkeit von seismischen hier übertragenen Wellen, unter Anbringung einer festen Station wenigstens einer Anordnung von seismischen Empfängern (R) umfassend,
- für die Dauer der Überwachung der Zone die Installation von mehreren seismischen repetitiven Quellen gleichen Typs (S) an festen Orten bezogen auf die Position des Bohrlochs, wobei das Verfahren sich dadurch auszeichnet, daß es die Installation sowie ein Netz (2) für die dauernde Verbindung zum selektiven Speisen dieser Quellen mit Energie und
- die Anbringung einer zentralen Station (4), die so ausgelegt ist, daß sie selektiv jede dieser seismischen Quellen (S) vermittels dieses permanenten Verbindungsnetzes (2) fernsteuert und die seismischen aus der unterirdischen Zone stammenden Signale in Abhängigkeit von den seismischen Wellen aufzeichnet, die selektiv in den Erdboden durch die seismischen Quellen (S) übertragen werden,
umfaßt.

2. Verfahren nach Anspruch 1, dadurch gekennzeichnet, daß wenigstens ein Teil der seismischen Quellen (S) und des Verbindungsnetzes (2) eingegraben ist.

3. Verfahren nach Anspruch 1, dadurch gekennzeichnet, daß wenigstens ein Teil der seismischen Quellen (S) und des Verbindungsnetzes (2) permanent an der Oberfläche installiert ist.

4. Verfahren nach einem der vorhergehenden Ansprüche, dadurch gekennzeichnet, daß es die Verwendung der seismischen Aufzeichnungen umfaßt, die für die Überwachung einer unterirdischen Lagerstätte zum Speichern von Fluiden vorgenommen wurden.

5. Verfahren nach einem der vorhergehenden Ansprüche, dadurch gekennzeichnet, daß wenigstens eine Anordnung (R) von seismischen Empfängern permanent mit der Erdbodenoberfläche gekoppelt ist.

6. Verfahren nach einem der Ansprüche 1 bis 4, dadurch gekennzeichnet, daß wenigstens eine Anordnung (R) von Empfängern permanent mit der Wand wenigstens eines die unterirdische Zone durchsetzenden Bohrlochs gekoppelt ist.

7. Vorrichtung zur seismischen überwachung einer unterirdischen durch wenigstens ein Bohrloch oder eine Bohrung durchsetzten Zone beispielsweise einer unterirdischen Lagerstätte durch Speicherung von Fluiden, wenigstens eine Anordnung seismischer in fester Station angeordneter Empfänger umfassend und mehrere seismische repetitive Quellen (S), die in fester Station installiert sind, dadurch gekennzeichnet, daß sie eine Gruppierung (3) zur Speisung der Quellen mit Energie, ein Netz (2) zur permanenten Verbindung zwischen der Speiseanordnung (3) und den verschiedenen Quellen (S) umfaßt, um sie selektiv mit Energie zu speisen; sowie eine zentrale Station (4), welche Mittel zur selektiven Fernsteuerung jeder der repetitiven Quellen einschließt sowie ein System zum Aufzeichnen der seismischen aus der unterirdischen Zone stammenden Signale, welche durch die Gruppierung (R) von Empfängern in Abhängigkeit von den seismischen Wellen empfangen wurden, die selektiv in den Erdboden durch die seismischen Quellen übertragen wurden.

8. Vorrichtung nach dem vorhergehenden Anspruch, dadurch gekennzeichnet, daß wenigstens ein Teil der seismischen Quellen (S) und des Netzes (2) zur permanenten Verbindung eingegraben ist.

9. Vorrichtung nach Anspruch 7, dadurch gekennzeichnet, daß wenigstens ein Teil der seismischen Quellen (S) und des Netzes (2) zur permanenten Verbindung in fester Station an der Oberfläche angeordnet ist.

10. Vorrichtung nach einem der Ansprüche 7 bis 9, dadurch gekennzeichnet, daß sie Kommutierungs- oder Umschaltelemente (12, 13) umfaßt, die durch die zentrale Station (4) zur selektiven Speisung der verschiedenen seismischen Quellen (S) mit Energie geregelt sind.

11. Verfahren nach einem der Ansprüche 7 bis 10, dadurch gekennzeichnet, daß sie eine oder mehrere seismische Quellen umfaßt, die so ausgelegt sind, daß sie Störungen durch Explosion eines Gemisches aus fluiden Bestandteilen in einer Kammer (18) im Kontakt mit dem Erdboden erzeugen und eine Anordnung (3, 12, 13) zur selektiven Speisung jeder Kammer (18) mit explosivem Gemisch und zum Zünden dieses Gemisches vorgesehen ist, wobei das Netz eingegrabene Leitungen (6, 7) in Zuordnung zu Regelventilen (12, 13) umfaßt, die mit dieser Speiseanordnung verbunden sind.

12. Vorrichtung nach dem vorhergehenden Anspruch 11, dadurch gekennzeichnet, daß die Speiseanordnung (3) Mittel umfaßt, um das Netz (6, 7) mit einem fluiden Bestandteil zu speisen, der aus der unterirdischen Zone entnommen oder extrahiert wurde.

13. Vorrichtung nach einem der Ansprüche 7 bis 10, dadurch gekennzeichnet, daß sie eine oder mehrere seismische Quellen umfaßt, die je eine eingegrabene Kammer (19, 21) umfassen, die elastisch verformbar und mit Flüssigkeit gefüllt ist, wobei das Speisenetz (23) mit Flüssigkeit gefüllt ist und die Speiseanordnung Mittel (A, 23) umfaßt, um im Puls Überdrücke in der Flüssigkeit zu erzeugen.

14. Verfahren nach einem der Ansprüche 7 bis 10, dadurch gekennzeichnet, daß sie eine oder mehrere Quellen umfaßt, die je eine eingegrabene Kammer (25) umfaßt, die fluidgefüllt sind sowie eine Anordnung, um an das Fluid der Kammerschwingungen zu legen und diese Anordnung einen Zylinder (26) umfaßt, der gegen das Innere der Kugel offen ist und über ein Verbindungsmittel (27) mit einem Fernvibrator (28) verbunden ist und ein Kolben (29) gleitbeweglich im Zylinder gelagert ist, um Vibrationen oder Schwingungen an das Fluid der Kugel zu legen.

15. Verfahren nach einem der Ansprüche 7 bis 14, dadurch gekennzeichnet, daß sie wenigstens eine Anordnung (R) von Empfängern umfaßt, die bei fester Station in wenigstens einem die unterirdische Zone durchsetzenden Bohrloch (1) installiert sind.

16. Vorrichtung nach einem der Ansprüche 7 bis 15, dadurch gekennzeichnet, daß die unterirdische Zone eine unterirdische Lagerstätte zum Speichern von Fluiden ist und Mittel zur Verarbeitung der Aufzeichnungen umfaßt, welche die Erfassung der durch diese Lagerstätte erfahrenen Veränderungen ermöglicht.

## Claims

1. A method for seismically monitoring an underground zone crossed by at least one production well or bore, such as an underground reservoir for storing fluids, by means of seismic waves received and recorded, emanating from an underground zone in response to seismic waves transmitted thereto, at least one array of seismic receivers (R) being installed in a fixed position, consisting in:
- for the duration over which the area will be monitored, installing several repetitive seismic sources of a same type (S) at fixed locations relative to the position of the well, the method being characterised in that it also consists in installing a permanent linking network (2) for selectively supplying these sources with energy and
- setting up a central control station (4) programmed to control remotely and selectively each of these seismic sources (S) by means of this permanent linking network (2) and record the seismic signals emanating from the underground zone in response to the seismic waves selectively transmitted into the ground by the seismic sources (S).

2. A method as claimed in claim 1, characterised in that at least some of the seismic sources (S) and the linking network (2) are buried.

3. A method as claimed in claim 1, characterised in that at least some of the seismic sources (S) and the linking network (2) are permanently installed at the surface.

4. A method as claimed in one of the preceding claims, characterised in that it includes using the compiled seismic recordings as a means of monitoring an underground reservoir for storing fluids.

5. A method as claimed in one of the preceding claims, characterised in that at least one array (R) of seismic receivers is permanently coupled with the ground from the surface.

6. A method as claimed in one of claims 1 to 4, characterised in that at least one array (R) of receivers is permanently coupled with the wall of at least one bore crossing through the underground zone.

7. A device for seismically monitoring an underground zone crossed by at least one well or bore, such as an underground reservoir for storing fluids, comprising at least one array of seismic receivers placed in a fixed position and several repetitive seismic sources (S) installed in a fixed position, characterised in that it has a unit (3) for supplying the sources with energy, a permanent linking network (2) between the supply unit (3) and the different sources (S) in order to supply them selectively with energy and a central station (4) incorporating means for remotely and selectively controlling each of the repetitive sources as well as a system for recording the seismic signals emanating from the underground zone received by said array (R) of receivers in response to seismic waves selectively transmitted into the ground by the seismic sources.

8. A device as claimed in the preceding claim, characterised in that at least some of the seismic sources (S) and the permanent linking network (2) are buried.

9. A device as claimed in claim 7, characterised in that at least some of the seismic sources (S) and the permanent linking network (2) are placed in a fixed position at the surface.

10. A device as claimed in one of claims 7 to 9, characterised in that it has switching elements (12, 13) controlled by the central station (4) for selectively supplying the different seismic sources (S) with energy.

11. A device as claimed in one of claims 7 to 10, characterised in that it has one or more seismic sources designed to create vibrations by exploding a mixture of fluid constituents in a chamber (18) in contact with the ground and a unit (3, 12, 13) for selectively supplying each chamber (18) with an explosive mixture and igniting this mixture, the network having buried lines (6, 7) fitted with control valves (12, 13) connected to this supply unit.

12. A device as claimed in claim 11, characterised in that the supply unit (3) has means for supplying the network (6, 7) with a fluid constituent drawn off or extracted from the underground zone.

13. A device as claimed in one of claims 7 to 10, characterised in that it has one or more seismic sources, each comprising a buried elastically deformable enclosure (19, 21) filled with liquid, the supply network (23) being filled with liquid, and the supply unit having means (A, 23) for creating pressure surges in the liquid.

14. A device as claimed in one of claims 7 to 10, characterised in that has one or more sources, each comprising a buried enclosure (25) filled with fluid and a unit for applying vibrations to the fluid in the enclosure, this unit comprising a cylinder (26) opening onto the interior of the sphere and communicating by a linking means (27) with a remote vibrator (28) and a piston (29) slidably mounted in the cylinder for applying vibrations to the fluid in the sphere.

15. A device as claimed in one of claims 7 to 14, characterised in that it has at least one array (R) of receivers installed in a fixed position in at least one well (1) crossing through the underground zone.

16. A device as claimed in one of claims 7 to 15, characterised in that since the underground zone is an underground reservoir for storing fluids, it has means for processing recordings so that variations to which said reservoir has been subjected can be detected.
